# EUROPÄISCHE PATENTSCHRIFT

(11) **EP 0 336 167 B1**
(45) Veröffentlichungstag und Bekanntmachung des Hinweises auf die Patenterteilung: **27.12.1995**
(21) Anmeldenummer: 89104717.7
(22) Anmeldetag: 16.03.1989
(51) Int. Cl.: G02B 6/36, A61B 6/00, G02B 6/42, H04B 10/22

(54) **Optoelektronisches Koppelsystem**
Optoelectronic coupling system
Méthode de couplage opto-électronique

(30) Priorität: 31.03.1988 DE 3810936
(43) Veröffentlichungstag der Anmeldung: 11.10.1989
(73) Patentinhaber: SIEMENS AKTIENGESELLSCHAFT, 80333 München (DE)
(72) Erfinder: Kuhlmann, Werner, Dr., D-8000 München 90 (DE)

(56) Entgegenhaltungen:
- EP-A- 0 021 897
- GB-A- 2 109 189
- GB-A- 2 137 040
- PATENT ABSTRACTS OF JAPAN, Band 5, Nr. 66 (E-55)[738], 2. Mai 1981 ; & JP-A-56 16 334

## Beschreibung

Die Erfindung betrifft ein optoelektronisches Koppelsystem nach dem Oberbegriff des Anspruchs 1.

Ein derartiges optoelektronisches Koppelsystem geht aus der GB-A-2 109 189 als bekannt hervor. Bei der dort beschriebenen Vorrichtung zur Datenübertragung zwischen zwei rotierenden Teilen sind zwei Farb-Multiplexer optisch miteinander gekoppelt, und zwar über eine gemeinsame optische Verbindung, die in einem Drehlager an einem Drehpunkt mechanisch unterbrochen ist, so daß die Verbindung ohne Verdrillen drehbar ist.

Weiterhin ist aus der JP-A-56-16 334 ein Informationsübertrager zwischen einem Rotor und einem Stator bekannt, bei dem ein mit einer Linse versehenes Ende einer optischen Faser mit einer in der Drehachse eines Drehtisches angeordneten Linse einer weiteren optischen Verbindung optisch gekoppelt ist, die zur Signalübertragung zu einem optoelektronischen Wandler vergesehen ist.

Bekannte Systeme zur elektronischen Signalübertragung in Lichtwellenleitern bestehen aus einem optischen Sender (Lumineszenz- oder Laserdiode), dem Übertragungsmedium Lichtwellenleiter (Multimode- oder Monomodefaser) und einem optischen Empfänger (Photodiode oder Phototransistor). Im Vergleich zu koaxialen Übertragungssystemen ermöglichen Lichtwellenleitersysteme breite Übertragungskanäle über große Strecken bei gleichzeitig niedriger Dämpfung. Wegen der nichtlinearen Verzerrungen des elektrooptischen Systems eignet sich die elektrooptische Signalübertragung besonders für eine Digitalsignalübertragung.

Aufgrund dieser und weiterer Vorteile ist es erstrebenswert, ein solches System auch zur Signal- oder Datenübertragung auf bzw. von beliebig drehbaren elektromechanischen Systemen verwenden zu können. Allerdings besteht dabei das Problem, daß bei diesen Systemen eine Übertragung über die gebräuchlichen Lichtwellenleiter-Kabel nicht möglich ist, da diese eine kontinuierliche Drehung nicht mitmachen können.

Bekannte Vorrichtungen zur Signal- oder Datenübertragung auf bzw. von drehbaren Systemen arbeiten beispielsweise mit Schleifkontakten. Solche Systeme sind allerdings unzuverlässig und störanfällig. Auch Systeme auf der Basis der Funkübertragung sind insbesondere in elektromagnetisch stark belastbarer Umgebung störanfällig. Zudem können sich mehrere Systeme gegenseitig beeinflussen.

Der Erfindung liegt die Aufgabe zugrunde, diese Nachteile zu vermeiden und mit einem optoelektronischen Koppelsystem der eingangs genannten Art eine Signal- oder Datenübertragung auf bzw. von beliebig drehbaren elektromechanischen Systemen zu ermöglichen.

Diese Aufgabe wird erfindungsgemäß durch ein optoelektronisches Koppelsystem mit den Merkmalen des Anspruchs 1 gelöst.

Vorteilhafte Ausgestaltungen bzw. Weiterbildungen der Erfindung sind Gegenstand zusätzlicher Ansprüche.

Die mit der Erfindung erzielten Vorteile bestehen insbesondere darin, daß mit dem erfindungsgemäßen Koppelsystem eine Datenübertragung mittels Lichtwellenleiter von bzw. auf drehbare Systeme ermöglicht wird, indem die Drehbewegung an einer Koppelstelle abgefangen wird.

Augrund der hohen Bitrate, die mit optoelektronischen Systemen erreicht wird, kann ein solches System z.B. auch Fernsehbilder hoher Qualität seriell übertragen. Eine elektromagnetische Störung der Signalübertragung ist ausgeschlossen; Sender und Empfänger sind zudem galvanisch völlig getrennt.

Das vorgeschlagene System ist vorteilhaft auch bei Computertomographen anwendbar. Hier müssen Daten von einer drehbaren Meßaufnahme an einen Computer übermittelt werden, wobei die Drehachse den Aufnahmeraum für den Patienten darstellt und nicht benutzbar ist.

Anhand eines in den Figuren der Zeichnung dargestellten Ausführungsbeispiels wird die Erfindung näher erläutert. Es zeigen:
- Fig. 1: eine schematische Darstellung des erfindungsgemäßen optoelektronischen Koppelsystems und
- Fig. 2: das erfindungsgemäße Koppelsystem teilweise im Schnitt.

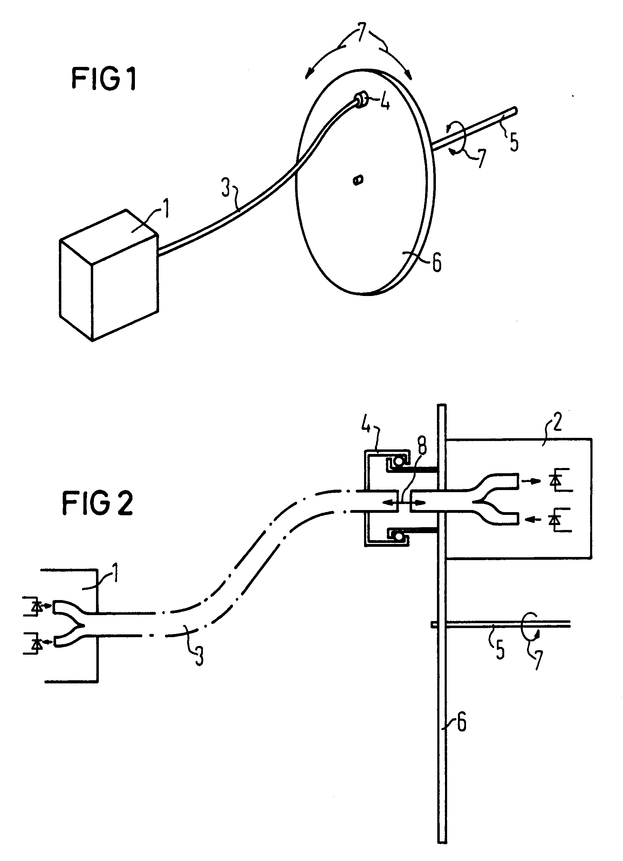

Das in den Figuren 1 und 2 dargestellte optoelektronische Koppelsystem besteht im wesentlichen aus einem flexiblen, aber torsionsstabilen Lichtwellenleiter-Kabel 3, dessen Enden an jeweils ein optoelektronisches Sender- und Empfängerbauelement 1, 2 optisch angekoppelt sind, so daß die Daten- bzw. Signalübertragung in diesem Ausführungsbeispiel bidirektional erfolgen kann. Das Lichtwellenleiter-Kabel 3 muß zu diesem Zweck an beiden Enden aufgesplittet sein. Das eine optoelektronische Sender- und Empfängerbauelement 1 befindet sich in einer Feststation. Am anderen Ende des Lichtwellenleiter-Kabels 3 befindet sich ein Drehlager 4, vorzugsweise ein Kugellager, dessen zweite Hälfte bzw. dessen eines Seitenteil mit dem sich drehenden System starr verbunden ist. Dieses System besteht aus einem Träger 6, vorzugsweise einem Drehteller, der um eine Rotationsachse 5 in der mit Pfeilen 7 angedeuteten Richtung drehbar ist. Die Verbindungsstelle von Drehlager 4 und Drehteller bzw. Träger 6 ist dezentral, auf dem Drehteller bzw. Träger 6 positioniert. Das Lichtwellenleiter-Kabel 3 ist im Drehlager 4 unterbrochen. Optisch findet jedoch eine Kopplung über diese unterbrochene Stelle statt. Es kann zweckmäßig sein, diese Kopplung durch ein Linsensystem noch zu unterstützen. Die Lichtein- bzw. Lichtauskopplung ist in Figur 2 mit den Pfeilen 8 angedeutet. Die Unterbrechung ist so ausgebildet, daß das Lichtwellenleiter-Kabel 3 in zwei axial gegenüberliegende Teile aufgetrennt ist, die jeweils in den Seitenteilen des Drehlagers 4 befestigt und somit axial optisch und mechanisch miteinander gekoppelt sind. Das mit dem Endteil des Lichtwellenleiter-Kabels 3 versehene Seitenteil des Drehlagers 4 ist mit dem um die Rotationsachse 5 drehbaren Träger (Drehteller) 6 an der Stelle starr verbunden, an der das andere optoelektronische Sender- und Empfängerbauelement 2 befestigt und an das Endteil des Lichtwellenleiter-Kabels 3 optisch angekoppelt ist.

## Patentansprüche

1. Optoelektronisches Koppelsystem mit einem Lichtwellenleiter-Kabel, an dessen Enden jeweils ein optoelektronisches Sender- und/oder Empfängerbauelement optisch angekoppelt ist, wobei das Lichtwellenleiter-Kabel (3) an seinem einen Ende mit dem einen optoelektronischen Sender- und/oder Empfängerbauelement (1) verbunden und am anderen Ende in zwei axial gegenüberliegende Teile aufgetrennt ist, die jeweils in den Seitenteilen eines Drehlagers (4) befestigt und somit axial drehbar optisch und mechanisch miteinander gekoppelt sind, dadurch gekennzeichnet daß das mit dem abgetrennten Endteil des Lichtwellenleiter-Kabels (3) versehene Seitenteil des Drehlagers (4) mit einem um eine Rotationsachse (5) drehbaren Träger (6) starr verbunden ist, auf dem das andere optoelektronische Sender- und/oder Empfängerbauelement (2) zur optischen Ankopplung an das Endteil des Lichtwellenleiter-Kabels (3) befestigt ist, und daß das Drehlager (4) und das benachbarte optoelektronische Sender- und/oder Empfängerbauelement (2) auf dem drehbaren Träger (6) außerhalb der Rotationsachse angebracht sind.

2. Optoelektronisches Koppelsystem nach Anspruch 1, dadurch gekennzeichnet daß der drehbare Träger (6) ein Drehteller ist.

3. Optoelektronisches Koppelsystem nach Anspruch 1 oder 2, dadurch gekennzeichnet daß das Drehlager (4) ein Kugellager ist.

4. Optoelektronisches Koppelsystem nach einem der Ansprüche 1 bis 3, dadurch gekennzeichnet daß das Lichtwellenleiter-Kabel (3) flexibel, aber torsionsstabil ausgebildet ist.

5. Optoelektronisches Koppelsystem nach einem der Ansprüche 1 bis 4, dadurch gekennzeichnet, daß das Lichtwellenleiter-Kabel (3) zur bidirektionalen Signal- oder Datenübertragung an seinen Enden aufgesplittet ist.

## Claims

1. Optoelectronic coupling system having an optical-fibre cable to each end of which an optoelectronic transmitting and/or receiving component is optically coupled, the optical-fibre cable (3) being connected at its one end to the one optoelectronic transmitting and/or receiving component (1) and being separated at the other end into two axially opposing parts which are each fastened in the side parts of a pivot bearing (4) and are thus coupled to one another optically and mechanically in an axially rotatable fashion, characterized in that the side part of the pivot bearing (4) which is provided with the separated end part of the optical-fibre cable (3) is rigidly connected to a support (6) which can be rotated about a rotation axis (5) and on which the other optoelectronic transmitting and/or receiving component (2) is fastened for optical coupling to the end part of the optical-fibre cable (3), and in that the pivot bearing (4) and the neighbouring optoelectronic transmitting and/or receiving component (2) are mounted on the rotatable support (6) outside the rotation axis.

2. Optoelectronic coupling system according to Claim 1, characterized in that the rotatable support (6) is a rotary plate.

3. Optoelectronic coupling system according to Claim 1 or 2, characterized in that the pivot bearing (4) is a ball bearing.

4. Optoelectronic coupling system according to one of Claims 1 to 3, characterized in that the optical-fibre cable (3) is constructed flexibly but in a torsionally stable fashion.

5. Optoelectronic coupling system according to one of Claims 1 to 4, characterized in that the optical-fibre cable (3) is split at its ends for bidirectional signal or data transmission.

## Revendications

1. Système de couplage optoélectronique comportant un câble à fibres optiques, aux extrémités duquel est couplé un composant optoélectronique émetteur et/ou récepteur, le câble (3) à fibres optiques étant relié par une de ses extrémités à l'un des composants (1) optoélectroniques émetteur et/ou récepteur et étant divisé à l'autre extrémité en deux parties en vis-à-vis par rapport à un axe, qui sont fixées chacune aux parties latérales d'un support (4) de rotation et qui sont ainsi couplées l'une à l'autre optiquement et mécaniquement avec possibilité de tourner autour de l'axe, caractérisé en ce que la partie latérale du support (4) de rotation, qui est munie de la partie d'extrémité séparée du câble (3) à fibres optiques est reliée de manière fixe à un support (6), qui peut tourner autour d'un axe (5) de rotation et sur lequel est fixé l'autre composant (2) optoélectronique émetteur et/ou récepteur destiné au couplage optique avec la partie d'extrémité du câble (3) à fibres optiques et le support (4) de rotation et le composant (2) optoélectronique voisin émetteur et/ou récepteur sont disposés en dehors de l'axe de rotation sur le support (6) pouvant tourner.

2. Système de couplage optoélectronique suivant la revendication 1, caractérisé en ce que le support (6) pouvant tourner est un plateau tournant.

3. Système de couplage optoélectronique suivant la revendication 1 ou 2, caractérisé en ce que le support (4) de rotation est un roulement à billes.

4. Système de couplage optoélectronique suivant l'une des revendications 1 à 3, caractérisé en ce que le câble (3) à fibres optiques est flexible mais résistant aux torsions.

5. Système de couplage otpoélectronique suivant l'une des revendications 1 à 4, caractérisé en ce que le câble (3) à fibres optiques destiné à la transmission bidirectionnelle d'un signal ou de données est divisé à ses extrémités.
